# EUROPEAN PATENT APPLICATION

(11) **EP 2 036 473 A1**
(43) Date of publication of application: **18.03.2009**
(21) Application number: 07116275.4
(22) Date of filing: 12.09.2007
(51) Int. Cl.: A47J 37/06

(54) **Automatic toasting apparatus**

(71) Applicant: Eksen Makine Sanayi ve Ticaret A.S., 41480 Kocaeli (TR)
(72) Inventor: Tahincioglu, Besim EKSEN Makine Sanayi ve Ticaret A.S., 41480 Kocaeli (TR)
(74) Representative: Sevinç, Erkan

(57) **Abstract**

The present invention proposes a domestic appliance and specifically an electrical toaster (11) having a pair of heating plates (12,13) in thermal communication with heat sources (18) accommodated to transfer heat to said plates (12,13). Grilling plates (12,13) are typically positioned in the manner that a lower plate (12) lies horizontally in a stationary manner and an upper plate (13) is hinged to be rotatable relative to said lower plate (12) to be closed upon the same in order for forming a grilling chamber (16) enclosing a food article from below and above. When a specified duration of grilling time determined by a user chosen setting is satisfied, electrical power transferred to heat sources (18) is interrupted and a rotary mechanism (24) operates to take said upper plate (13) to an open position. In the meantime a grill attachment (21) also coupled to said rotary mechanism (24) is elevated to a certain height in between the horizontal plane of the lower grilling plate (12) and the elevated plane of the upper grilling plate (13) where no conductional heat transfer occurs.

## Description

### Technical Field of the Invention

The present invention relates to an electrical household appliance and more particularly to a toaster having plates to brown a food article and particularly slices of bread by exposure to heat.

### Background of the Invention

Toasters are widely used all over the world. A toaster of the present type generally has a pair of hinged grilling plates receiving food article between them. The upper grilling plate being rotatable with respect to the lower grilling plate, when closed, defines a heating chamber for grilling a food article, for instance slices of bread.

A common problem with the grilling appliances of the present type is that care must be taken while toasting bread to avoid burning. A control panel is generally provided to let users set desired duration of time for grilling. Prior art domestic appliances in the field also addresses burning problem. JP 7241242 discloses such an appliance having two plates, the upper plate being automatically rotated by a motor to an open position upon completion of a user set time duration whereby burning of bread is prevented.

The present invention on the other hand, distinguishes from the prior art in that timely detachment of the upper plate from the plane where the lower plate extends does not always result in a direct solution of the burning problem for the reason that, although disconnected from power supply, heated plates still act as heat sources and continue to radiate stored heat energy.

Food article being in contact with the lower plate is therefore still exposed to heat and might well be still burnt. To this end, the present invention provides an improved arrangement to detach the food article from the lower plate wherein a user directly chooses exact duration of time grilling takes place and wherein grilling discontinues at the exact time as indicated by the user as the food article is taken away from both plates where conductional heat transfer is not effective.

The arrangement according to the present invention therefore ensures that both the upper plate and the food article displace relative to both the lower plate and each other. As a specified duration of time determined by a user chosen setting is satisfied, power transfer to heating means is interrupted and a rotary mechanism automatically steps in to detach said upper plate together with a mechanism to take the food article away to a location where no conductional heat transfer occurs.

### Objects of the Invention

Primary object of the present invention is to provide an electrical toaster in which grilling discontinues at the exact time as indicated by a user.

Another object of the present invention is to provide an electrical toaster in which grilled food article is taken away from grilling plates where conductional heat transfer is not effective.

Another object of the present invention is to provide an electrical toaster in which grilled food article is taken away from grilling plates at a location where only limited amount of convectional heat transfer occurs in order to keep grilled food warm for certain period of time. This period is determined by the content of heat accumulated in the plates during heating stage.

Another object of the present invention is to provide an electrical toaster in which an automatic mechanism operates to take grilled food article away from upper and lower grilling plates such that burnt food resulting from overheating is prevented.

### Summary of the Invention

The present invention proposes a domestic appliance and specifically an electrical toaster having a pair of heating plates in thermal communication with heat sources accommodated to transfer heat to said plates. Grilling plates are typically positioned in the manner that a lower plate lies horizontally in a stationary manner and an upper plate is hinged to be rotatable relative to said lower plate to be closed upon the same in order for forming a grilling chamber enclosing a food article from below and above. When a specified duration of grilling time determined by a user chosen setting is satisfied, electrical power transferred to heat sources is interrupted and a rotary mechanism automatically operates to take said upper plate to an open position. In the meantime a grill attachment also coupled to said rotary mechanism is elevated to a certain height in between the horizontal plane of the lower grilling plate and the elevated plane of the upper grilling plate where no conductionional heat transfer occurs.

### Brief Description of the Figures

Accompanying drawings are given solely for the purpose of exemplifying electrical toaster, whose advantages over prior art were outlined above and will be explained in detail hereinafter:

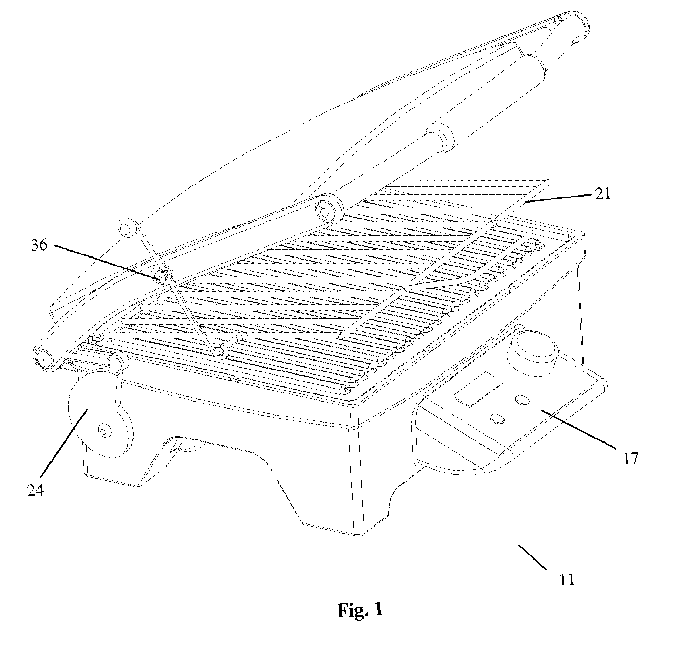

Fig. 1 demonstrates a general perspective view of the toasting apparatus according to the present invention where the grilling plates are in open position.

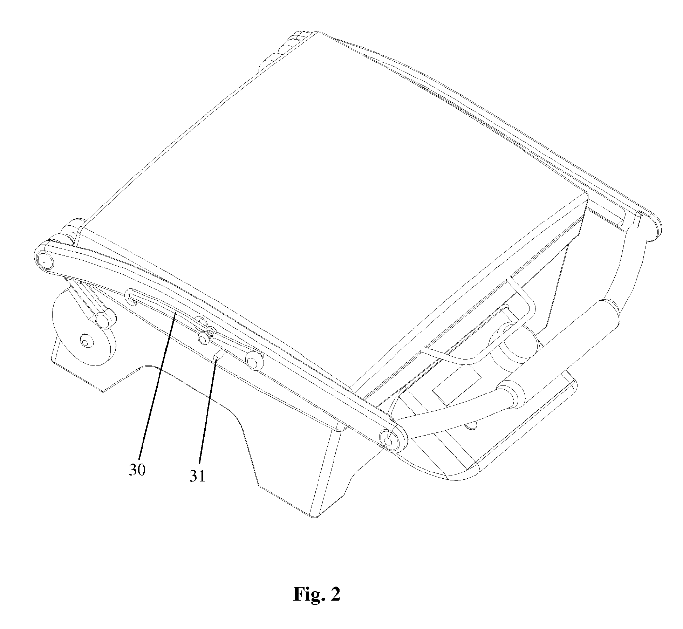

Fig. 2 demonstrates a general perspective view of the toasting apparatus according to the present invention where the grilling plates are in closed position.

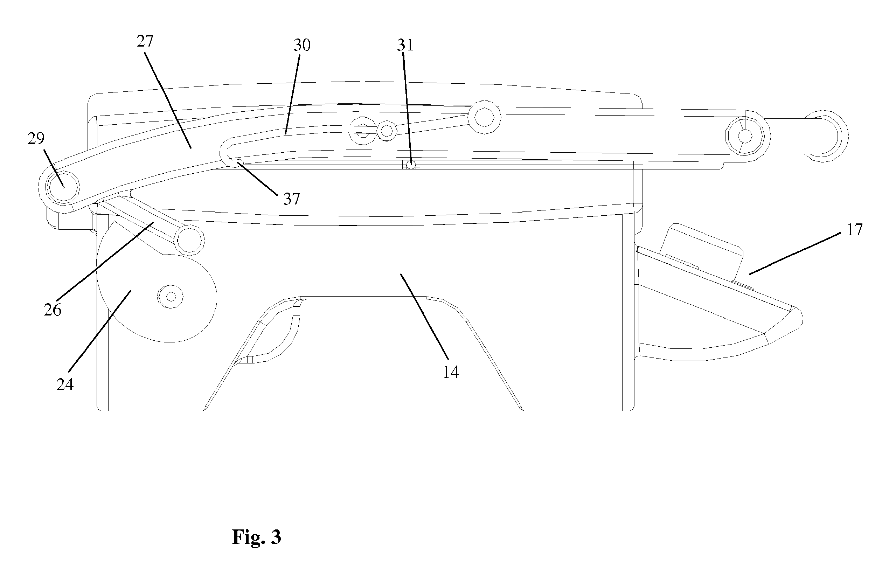

Fig. 3 demonstrates a side view of the toasting apparatus according to the present invention where the grilling plates are in closed position.

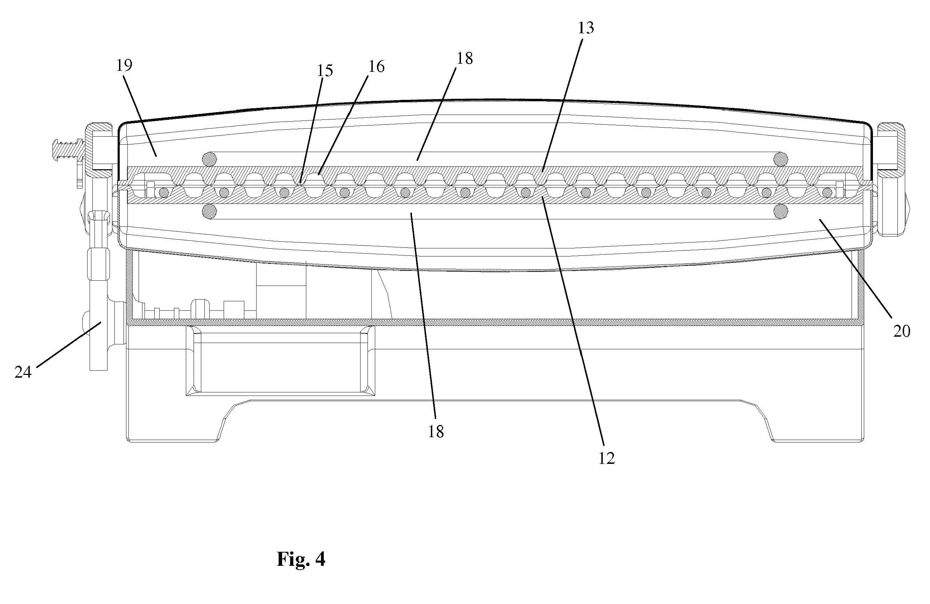

Fig. 4 demonstrates a front view of the toasting apparatus according to the present invention with the grilling attachment between the grilling plates in closed position.

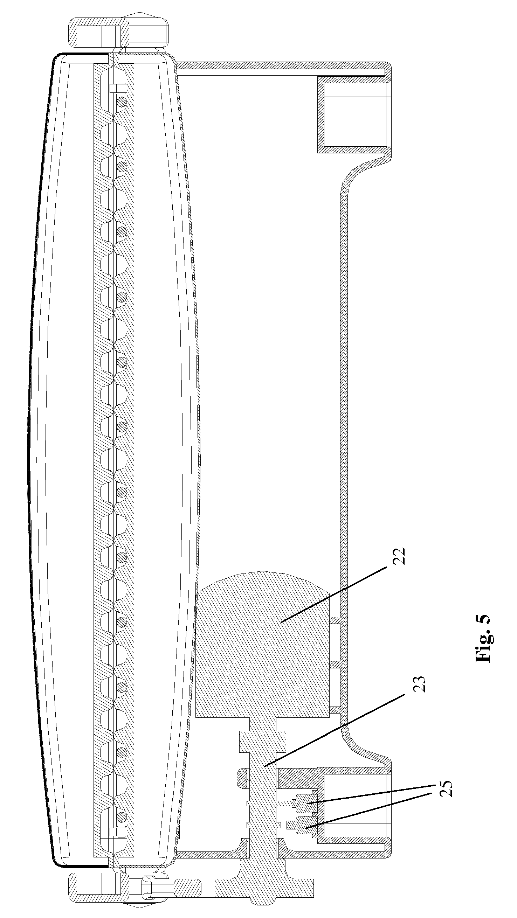

Fig. 5 demonstrates a front view of the toasting apparatus according to the present invention with the driving mechanism in closed position.
Fig. 6a, 6b and 6c demonstrate an alternative arrangement for attaching the grilling attachment to the upper plate housing according to the present invention.
Fig. 7a, 7b and 7c also demonstrate an alternative arrangement for attaching the grilling attachment to the upper plate housing according to the present invention.

### Detailed Description of the Invention

Referring now to the figures outlined above, the present invention proposes an electrical household appliance (11) and namely a toasting apparatus. The apparatus typically features a lower plate (12) stationary on a base part (14), the latter housing control electronics and driving mechanisms as will be explained hereinafter.

The upper grilling plate (13) according to the present invention is typically hinged to the lower grilling plate (12) in a manner to be rotatable relative to said lower plate (12). The upper grilling plate (13) is therefore adapted to be closed upon sad lower grilling (12) plate in a closed grilling position so as to provide a grilling chamber in which a food article being in contact with said plates (12, 13) from above and below.

The grilling plates (12, 13) are typically designed in the form to have lengthwise parallel protrusions (15) forming circular cross-section channels (16) extending between the front and rear parts of the apparatus (11) in closed position.

A control panel (17) typically provides users with different grilling options for instance to allow a longer grilling period. A user therefore setting a timer to a specified duration of grilling time of preference will energize heat sources (18) being electric resistances of conventional tubular type. Those are provided within the upper and lower plate housings (respectively 19, 20).

Upon completion of specified duration of time, powering of resistances (18) will discontinue along with said upper plate (13) automatically rotating upwards while at the same time raising a grilling attachment (21) to a intermediary plane between said upper (13) and said lower (12) grilling plates where conductive heat transfer is not anymore effective. Considering that grilling plates' (12, 13) cooling coefficient is relatively high as they require a relatively high thermal conduction coefficient, they still continue to radiate stored heat energy at the time electric resistances (18) are disconnected from power supply. Assuming the upper plate (13) is automatically detached from the upper surface of a given food article by a rotary mechanism without a grilling attachment (21) also detaching said food article from the lower plate (12), the article being in contact with said lower plate (12) would still be subject to conductive heat exposure. This might be a major concern especially if a user forgets the food article on the lower plate (12) after interruption of power as the lower face of the food article will burn due to conductive heat exposure. The grilling attachment (21) according to the present invention on the other hand, will ensure that the food article is taken to a safe position where no conductive heat exposure is present and convective heat exposure is negligible and only limited for keeping the grilled article warm i.e. preventing the article from cooling quickly. In addition, grilled food article can therefore still be consumed when unintentionally left on the grilling attachment (21).

The upper plate (13) according to the present invention is rotated by a small-sized low-power electric motor (22). To this end, said upper plate (13) and said grilling attachment (21) are driven by an electric motor reducer, i.e. by means of a mechanical reducer. The opening and closing accuracy of the upper plate housing (19) is provided by microswitches (25). A cam (24) coupled to said motor's (22) shaft (23) forcing a lever arm (26) upwards and causing a second lever arm (27) pivoting about a pivot axis (29) raises said upper plate housing (19). In the meantime a spring loaded catch arm (30) pivotally attached to a lateral portion of said second lever arm (27) rotates about a pivot axis (36) to catch an extended tip portion (31) of said grilling attachment (21). Said grilling attachment (21) displacing to an inclined intermediary position between said grilling plates (12, 13) keeps grilled food away from conductive heat exposure. The grilled food article is then only subject to a limited amount of convective heat exposure which occurs in the space in between the plates and which thereby keeps the article warm for a certain period. Final inclination of the plane with respect to the horizontal plane said grilling attachment (21) displaces is set to a reasonable degree in order for preventing sliding of the food article due to gravity. After the food article is taken from said grilling attachment (21), said upper plate (13) should be opened to an upright position and said catch arm (30) should be rotated back for reseating said grilling attachment (21). Parallel metal bars of said grilling attachment (21) can suitably be placed along said circular cross-section channels (16) formed by said upper (13) and lower (12) grilling plates in closed position.

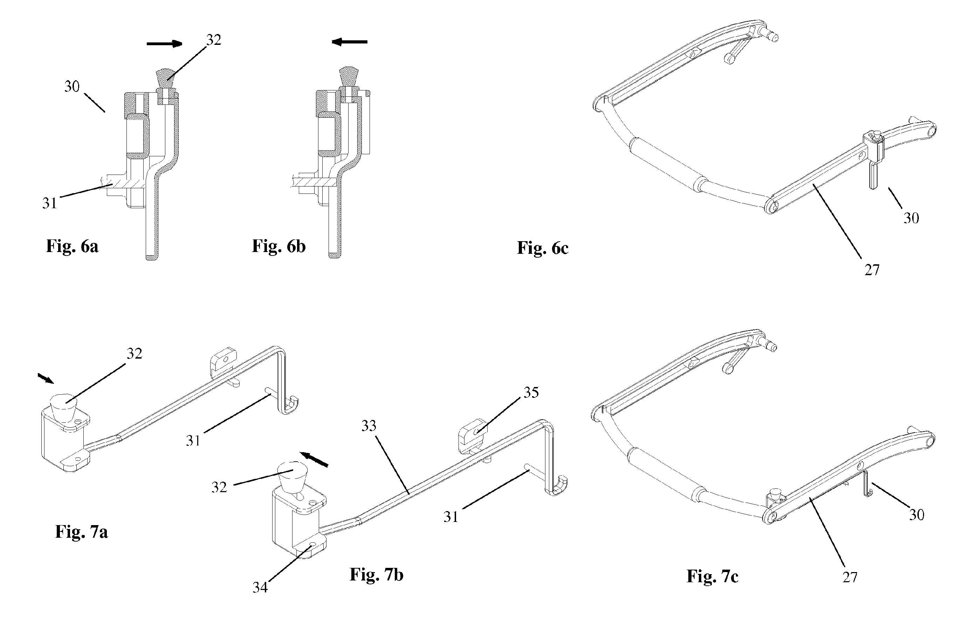

Due to the fact that reducer mechanism along with status of the cam (24) reflected by microswitches (25) to the control electronics are not within the scope of the present invention and are widely practiced in the art to the extent to be easily appreciated by the person skilled in the art, needs not be further mentioned herein. Further, a digital control panel (17) may be provided to let users set thermostat and timer. It is further evident that any suitable mechanism allowing automatic lifting of said grilling attachment (21) as said motor (22) rotates said upper grilling plate housing (19) is within the scope of the core approach the present invention provides. The core approach underlying the invention, that is, simultaneous lifting of said grilling attachment (21) along with said grilling plate housing (19) in the manner that said grilling attachment reaches an inclined final plane apart from said grilling plates' planes may be accomplished for instance by means of various hook arrangements pivotally coupled to said second lever arm (27). Alternative mechanical arrangements for fulfilling this purpose are exemplified in Fig. 6 and 7.

To this end, said catch arm (30) may be arranged such that a catch arm handle (32) is adjusted to provide engagement of the grilling attachment in said catch arm (30). Said handle (32) can be advanced back and forth as shown in Fig. 6a and 6b to fix said extended tip portion (31) of said grilling attachment (21).

Alternatively in Fig 7, it is seen a catch arm (30) fixed to said second lever arm (27) at 34 and 35 and slidable advancing an elongated hook body portion (33) back and forth by means of a catch arm handle (32) as indicated by the arrow in Fig. 7a and 7b.

## Claims

1. An electrical toasting apparatus (11) comprising a horizontally lying stationary lower grilling plate (12), an upper grilling plate (13) hingedly mounted on said lower plate (12) in the manner to be closed upon said lower plate (12) to form a grilling chamber between said plates (12, 13), electrical resistances (18) in thermal communication with said upper (13) and lower (12) grilling plates and an automatically operable rotary mechanism for driving said upper plate (13) to an opened position upon completion of grilling wherein said rotary mechanism is coupled to a grilling attachment (21) to be raisable by said rotary mechanism and suitable for receiving a food article to be grilled between said upper (13) and lower (12) grilling plates.

2. An electrical toasting apparatus (11) as in Claim 1 wherein said rotary mechanism is comprised of an electrical motor (22) driving said upper grilling plate (13) through a reducer mechanism.

3. An electrical toasting apparatus (11) as in Claim 1 wherein said upper (13) and lower (12) grilling plates comprise lengthwise parallel protrusions (15) forming circular cross-section channels (16) extending between the front and rear parts of said toasting apparatus (11) in closed position whereby said grilling attachment (21) is suitable to be placed along said circular cross-section channels (16) of the upper (13) and lower (12) grilling plates.

4. An electrical toasting apparatus (11) as in Claim 1 or 2 wherein a catch arm (30) is pivotally attached to a lateral portion of a lever arm (27) connected to said upper plate housing (19) to catch an extended tip portion (31) of said grilling attachment (21) in order for raising said grilling attachment (21).

5. An electrical toasting apparatus (11) as in Claim 4 wherein said catch arm (30) is a spring loaded elongated body having a hook portion (37) simultaneously rotating about a pivot axis (36) in order for raising said grilling attachment (21) as said upper plate housing (19) is elevated.

6. An electrical toasting apparatus (11) as in Claim 1 and 5 wherein said upper plate housing (19) is elevated to a maximum of 45 degrees whereby said grilling attachment (21) displaces to an intermediary plane between said grilling plates (12, 13).
